# EUROPEAN PATENT SPECIFICATION

(11) **EP 1 577 791 B1**
(45) Date of publication and mention of the grant of the patent: **02.11.2011**
(21) Application number: 04006205.1
(22) Date of filing: 16.03.2004
(51) Int. Cl.: G06F 17/21, G06F 17/27

(54) **XML content monitoring**
Inhaltsüberwachung für XML
Surveillance du contenu XML

(43) Date of publication of application: 21.09.2005
(73) Proprietor: Microdasys Inc., Las Vegas NV 89119 (US)
(72) Inventor: Baumhof, Andreas, 81379 München (DE)
(74) Representative: Dickerson, David

(56) References cited:
- EP-A- 1 043 671
- EP-A- 1 376 391
- US-A1- 2003 196 104
- US-B1- 6 408 311
- US-B1- 6 502 112
- US-B1- 6 662 342

## Description

### BACKGROUND OF THE INVENTION

### Field of the invention

The present invention relates to a method for monitoring the content of a data object comprising XML-coded data, in particular for monitoring the content of data streams comprising XML documents. The present invention moreover relates to a corresponding apparatus/system as well as to a corresponding computer program product.

### Description of the related prior art

XML-scanners and content-security scanners such as antivirus scanners are known in the art.

It will be appreciated that XML scanners have been in use for years. Typically, XML scanners are employed to confirm the validity of XML objects with respect to some sort of (syntax) definition based e.g. on the XML scheme, on WSDL or other definition formats and to check authentication, authorization of an XML object requestor and to check the well-formattedness of all the XML objects, i.e. an XML request-response pair.

A problem with conventional XML scanners is that they cannot scan an XML object in view of content security, which means that they cannot effectively content scan XML objects e.g. for viruses, malicious code, etc. Another problem with conventional XML scanners are that they can only validate known XML objects, which is useful for a provider of an XML-based systems such as web services, but is useless for people accessing many different XML-based systems. Another problem with conventional XML scanners is that they do not increase security, since their primary focus is on authentication and well-formattedness, whence they are used in XML-based systems such as web services.

While these devices may be suitable for the particular purpose to which they address, they are not as suitable for validating XML objects (or parts thereof) against content-security policies such as the classification of the XML object and content scanning, e.g. antivirus scanning, malicious code scanning, etc.

The main problem with existing content-security scanners such as antivirus scanners, URL filters, malicious code scanner, etc.) is that they are only capable of scanning the whole file itself. XML objects can have many attachments included. Each of them can be e.g. encoded with a different encoding-algorithm.

Moreover, existing content-security scanners cannot be used for validating XML objects because of the special nature of the XML definition. XML objects are highly structured and the information contained therein is encapsulated within tagged elements. An element typically has three components: name, type and content. The processing provided by existing content-security scanners does not reflect this special structure. Furthermore, XML requests and their respective XML responses belong together, yet content-security scanners normally care only for the response.

In view of the above, it is an object of the present disclsoure to provide a method, an apparatus/system and a computer program product suitable for monitoring the content of data objects comprising XML-data that overcomes the aforementioned deficiencies of the prior art. It is a further object to provide a method, an apparatus/system and a computer program product that is suitable for more thoroughly monitoring the content of data objects comprising XML-data than conventionally possible by means of the prior art. In particular, it is an object to provide a method, an apparatus/system and a computer program product suitable for validating XML objects (or parts thereof) against content-security policies such as the classification of the XML object and content scanning, e.g. antivirus scanning, malicious code scanning, etc.

A further object of the present disclosure is to provide a method, an apparatus/system and a computer program product for content scanning of unknown XML objects for validating XML objects (or parts of it) against content-security policies. These content-security policies include the classification of the XML object and content scanning (e.g. an antivirus-check, or check for malicious code, etc.).

Another object is to provide a method, an apparatus/system and a computer program product for content scanning of unknown XML objects that analyzes and scans XML objects with respect to content-security.

Another object is to provide a method, an apparatus/system and a computer program product for content scanning of unknown XML objects that is capable of categorizing an XML object.

Other objects and advantages of the present disclosure will become obvious to the reader. It is intended that these objects and advantages are within the scope of the present invention.

Further information pertaining to the prior art can be found in US 2003/196104 A1 that discloses a content sanitation process performed via a transcoding engine. In particular, it discloses that the transcoding engine can include one or more patterns, each pattern identifying malicious content in a well-formed document. The transcoding engine also can include an annotation processor configured to annotate portions of the well-formed document which match the patterns. Finally, the transcoding engine can include a content sanitization processor configured to normalize the annotated portions in a transcoded document. In a preferred aspect, the transcoding engine can include a privacy policy resolution processor configured to identify terms of a privacy policy and to annotate portions of the well-formed document which violate the terms. In one disclosed aspect, viral content within markup can be processed as an XML document defining a series of Xpath and extensible stylesheet (XSL) transformation patterns. In this aspect it is assumed that the XML document has been well formed, as in the case of XHTML, and that the XML document can be processed by an XML compliant parsing process. Once parsed and formed into a document object model (DOM), the Xpath and XSL transformation patterns can be used to locate the virulent patterns within the XML document. Upon identifying each virulent pattern, an XSL transformation can be applied to the XML document in order to render the document harmless before forwarding the document to its intended recipient. Where the document has not been well-formed, however, allowances can be made in order to convert the document into a well-formed document, as is known in the art.

WO 00/03315 teaches a search system for information retrieval that comprises a data structure for storing a text T, a combined metric M which includes an edit distance metric for approximate degree of matching between words and/or symbols or sequences thereof in the text T and words and/or symbols in a sequence P, weighting cost functions for edit operations which transform a sequence S of words or symbols into the sequence P, and a search algorithm for determining the degree of matching between words or word sequences in a suffix tree representation of respectively the text T and a query Q. The algorithm searches the data structure with the query Q, retrieving information with specified match to the query.; A method in a search system for information retrieval generates a word-spaced sparse suffix tree for storing suffixes of words in a text T as word sequence information, and a word size-dependent edit distance metric for word sequences S, P and including word-weighted cost functions for edit operations, and determines matches between word sequences SR or retrieved information R and word sequences PQ of a query Q by calculating the edit distance for all matches. Use in an approximate search engine.

### SUMMARY OF THE INVENTION

The present invention provides a method for monitoring the content of a data object comprising XML-coded data in accordance with independent claim 1 as well as a corresponding computer program product in accordance with independent claim 17 and a corresponding apparatus in accordance with independent claim 18. Preferred embodiments of the invention are reflected in the dependent claims.

The claimed invention can be better understood in view of the embodiments described and illustrated in the present disclosure, *viz.* in the present specification and drawings. In general, the present disclosure reflects preferred embodiments of the invention. The attentive reader will note, however, that some aspects of the disclosed embodiments extend beyond the scope of the claims. To the respect that the disclosed embodiments indeed extend beyond the scope of the claims, the disclosed embodiments are to be considered supplementary background information and do not constitute definitions of the invention *per se.*

In its broadest aspect, the present disclosure teaches a method for monitoring the content of a data object comprising XML-coded data, wherein the method comprises one or more steps determining, for one or more categories, a degree to which one or more of pieces of plaintext data, comprised in said data object and indicative of one or more unique identifiers belonging to a group of unique identifiers, match data associated with the respective category. Preferably, the method comprises one or more steps scanning content of said data object so as to determine the presence/absence of such pieces of plaintext data within said content.

The present disclosure likewise teaches a corresponding apparatus/system or computer program product. While the present description may, for the sake of brevity, limit itself to a description of methods, the teachings of this specification are to be understood as applying equally to a corresponding apparatus/system and computer program product capable of, in particular configured and adapted for, effecting the functionality of the described methods.

In accordance with the present disclosure, XML-coded data is any data that comprises elements and/or entities, in particular entities constituting an XML document, as defined in the World Wide Web Consortium recommendation of October 6th, 2000 entitled "Extensible Markup Language (XML) 1.0 (Second Edition)." Although preferable, the present disclosure makes no assumption that the aforementioned elements and entities be well-formed or valid as defined in said recommendation. As will be apparent from the present description, XML-coded data in accordance with the present disclosure can likewise be any data comprising data that appears, *prima facie,* to comprise non-trivial syntactical constituents of said recommendation, in particular data that comprises at least one syntactical constituent characteristic of said recommendation or that comprises syntactical constituents of said recommendation to the degree that at least part of said data would be subject to processing if input to an XML processor as defined in said recommendation.

In accordance with the present disclosure, a data object is to be understood in the sense of a delineable set of data. The set of data may comprise one or more (e.g. spatially or temporally) disjoint subsets of said data, e.g. previously stored data constituting a request and a current data stream constituting a corresponding response. As is known in the art of data processing, data is a representation of information, which representation may be in the form of signals, storage media states, etc. The present invention places no restrictions on the physical representation of a data object.

It is an object of the present disclosure to monitor a data object e.g. for undesired, agreeable and questionable content. For classifying content, e.g. as undesired or agreeable, the inventor has determined it to be useful to define one or more categories, each of which can be associated with one or more of the aforementioned content classifications. Examples of such categories are News, Online Shopping, Stock Sites, Adult Sites, etc. In the case of an employer monitoring employee Internet data communication, categories such as news and stocks could be considered agreeable in the context of the brokerage, whereas these categories could be classified as undesirable in the context of an engineering firm. The present disclosure does not place any restriction on the choice or number of categories; nor does it place any restriction on a choice of classification of content of a data object with regard to its categorization.

At this point it should be noted that XML essentially constitutes a manner of "packaging" data for platform-independent communication, e.g. over the Internet, thereof. XML is thus open to usage by a wide range of applications and algorithms. An example of the utility of XML is given in the document entitled "SOAP Version 1.2" cited in the bibliography at the end of this description. Typically, both the so-called markup, *i.e.* the constituents of the data that confer it with XML syntax, as well as the so-called character data, *i.e.* the actual, "packaged" data, of XML-coded data exhibits constituents that are indicative of e.g. the source, destination and/or content of the data, *i.e.* constituents that may allow the data to be classified.

In addition to its markup and character data, unparsed entities of an XML document may comprise such indicative constituents. It should be noted, however, that beyond the requirement that an XML processor make the identifiers for the entity and notation available to the (host) application, XML places no constraints on the contents of unparsed entities. Consequently, the difficulties of monitoring XML unparsed entity content of a data object are not substantially aggravated by XML syntax requirements over the monitoring of generic data content of a data object.

The disclosed method determines a degree to which one or more of pieces of plaintext data match data associated with respective categories. Since the character data of an XML element may encoded differently than the markup of that element, e.g. using MIME, DIME or Base64 encoding, its content may be difficult to classify at a first monitoring stage. The disclosed method thus bases an estimation of the content of the data object, at an early stage, on plaintext data comprised in the data object and indicative of one or more unique identifiers belonging to a group of unique identifiers.

In the context of the present disclosure, plaintext data is preferably to be understood as data encoded in accordance with the same encoding scheme used for the data object as a whole. For example, plaintext data can be data coded in accordance with the general encoding scheme of a data stream, a portion of which constitutes the data object. Such encoding schemes can include, but are not limited to UTF-16LE, UTF 16BE, UTF-8, ISO 646, ISO Latin 1, ISO Latin 2, ASCII, Shift-JIS, EUC, and other 7-bit, 8-bit, 16-bit, 32-bit, or mixed-width encoding schemes as known in the art of character encoding. Plaintext data may preferably also comprise data that is encoded in accordance with an encoding scheme explicitly stated or implicitly assumable to apply to the portion of said data in which said plaintext data is located. For example, for data located in an XML root entity, plaintext data will be encoded in accordance with the encoding scheme of said XML root entity. Detection/identification of the encoding scheme of an XML entity is elucidated e.g. in Appendix F of the aforementioned XML recommendation. Plaintext data does not comprise XML element character data that has been encoded in accordance with an encoded scheme that may be discernable based on characteristics of the encoding scheme, but that is not known *a priori,* in particular that is neither explicitly declared nor implicitly assumable without determining the element's type.

As a example of non-plaintext data, assume a fictitious element of the type "Address_Info_Base64" that has been defined for use in the public domain for exchanging address information between applications and platforms, wherein the element comprises several address-related elements, the respective content, *i.e.* character data, of which is coded in accordance with the Base64 encoding scheme, yet wherein the markup of said element is not Base64 encoded. Without *a priori* knowledge of the encoding scheme of the element and without determining the element's type, the encoding scheme of the Base64 data will be discernable, yet will not be known *a prior, i.e.* prior to investigation. In the above example, the Base64 character data would not constitute plaintext data in accordance with the present disclosure.

The markup associated with an XML document and its root-level elements comprises plaintext data that is often indicative of unique identifiers that can be matched with data associated with respective categories. Moreover, many applications of XML such as SOAP messages employ plaintext headers that precede the XML-encoded data or other plaintext constituents that are likewise often indicative of unique identifiers that can be matched with data associated with respective categories.

As will be elucidated in further detail below, such unique identifiers can be e.g. a hostname, a port, a request path, a user agent, a content type, a SOAP-action or any other user-defined http-header field, or a namespace of the XML-coded data. These, in turn, can be indicative of an appropriate categorization of the data associated therewith. For example, the string "host:" can be indicative of a subsequent hostname, and a (partial) match of the string subsequent to "host:" with e.g. "cnn.com" or "usatoday.com" could be considered indicative of a category "News." Consequently, in accordance with the present disclosure, a data set associable with the hostname "cnn.com" could, it its entirety, be categorized as "News," regardless of whether this is considered an agreeable, undesired or other classification.

The present disclosure does not place any restriction on the unique identifiers that may be employed for implementing the disclosed method. It is readily apparent that the choice of appropriate unique identifiers that will constitute the aforementioned group of unique identifiers will change over time as various applications of XML establish themselves in the public sector or go out of use. By establishing a group of unique identifiers, either in advance or on the fly, to which unique identifiers in the plaintext data must belong in order to be taken into regard during the categorization of the data object, the disclosed method is able to sensibly limit the scope of its monitoring.

In its broadest aspect, the present disclosure likewise teaches a method for monitoring the content of a data object comprising XML-coded data, comprising one or more steps identifying, on the basis of XML markup, XML elements within one or more parts of said data object and performing, for at least one of said identified XML elements, a content check of the respective XML element.

In accordance with the present disclosure, a content check can comprise a determination of the presence and/or absence of specified data in the item being checked. This specified data may be e.g. predetermined data, data that is dynamically adapted as part of the content check, user-specified data, etc. Preferably, such data will be chosen for its indicativeness of one or more content categories.

As will be discussed in further detail below, a content check in accordance with the present disclosure preferably comprises a recognition of XML-coded data, a syntactical decomposition, *i.e.* parsing, thereof as well as a decoding (e.g. in accordance with a MIME, DIME or Base64 encoding/decoding scheme) of its constituent data. Due to its ability to recognize XML-coded data, to recognize its various syntactic elements as well as its ability to decode even multiply encoded data of nested XML elements, the disclosed method is uniquely qualified to analyze, categorize and classify the content of data objects comprising XML-coded data.

Preferably, depending on the (intermediate) results of the content check, the content check may be terminated at any time or may proceed e.g. until the entire content of the subject of the content check has been parsed, decoded and inspected. Consequently, the present specification as well as appended claims often contain phrases such as "one or more" that indicate that the method/content check may be discontinued at an early stage, *e.g.* during inspection of a first item, or may take its full course, *e.g.* may proceed through an entire set of items.

It is readily conceivable that the disclosed method may, in typical usage, encounter data objects comprising malicious code in the form of data comprising fragments of a well-formed XML document *e.g.* for the sake of disguising the malicious code or for provoking dysfunction of or malicious function from an XML processor. Consequently, the disclosed method is preferably configured and adapted to identify and parse fragmentary XML-coded data and to decode its content.

However, it can be expected that the disclosed method, in a typical usage, will encounter well-formed XML documents when it encounters XML-coded data. Consequently, *e.g.* for the sake of scanning/parsing efficiency, the disclosed method will preferably only identify and content check XML elements that are root elements, in particular document elements, within a respective part under examination of the data object.

Preferably, the one or more steps performing a content check comprises one or more steps determining one or more likely encoding schemes of the XML element being subjected to the content check, decoding, for one or more of said likely encoding schemes, at least part of the XML element to obtain decoded content. Moreover, the one or more steps performing a content check preferably comprises one or more steps subjecting said decoded content to a content check.

Often, it can be extremely difficult to unambiguously determine, without a *priori* knowledge, the encoding scheme with which the content of an XML element has been encoded. This is true, for example, in the case of very little data content or when the content has been coded using a proprietary encoding scheme unique to the application that generated the XML element and not known to the general public. Accordingly, the disclosed method preferably (attempts to) determine(s) one or more likely encoding schemes of the XML element. Since this may simply equate to an attempt, it is possible that this determination returns the result "unknown." Assuming one or more results that the disclosed method is capable of decoding, the respective content may be decoded in accordance with the respective encoding/decoding scheme. Since, for example, the character data of an element may be multiply encoded and since elements may be nested, the result of the decoding is preferably itself subjected to a content check. As noted above, it is optionally provisioned that these processes may be terminated at any time, *e.g.* if the analysis of the encoding scheme yields an unambiguous result and the decoding of the respective content yields a result that allows the element currently being subjected to a content check to be unambiguously categorized and classified.

Preferably, a content check of an XML element is a recursive process comprising one or more steps identifying, on the basis of XML markup, child XML elements of said XML element within one or more parts of said XML element and performing, for at least one of said identified child XML elements, a content check of the respective child XML element.

XML elements may be nested. Implementation of a content check of an XML element as a recursive process, allows child elements (as well as 'predecessor' elements thereof) within said XML element to be content checked on a hierarchical level-by-level basis within the course of said content check.

In view of the possible nesting of XML elements and the possibly recursive nature of the disclosed method, the method steps described herein need not be effected in a single step. Instead, its effecting may be spread among numerous sub-steps. The present description thus often speaks of "one or more steps ...ing ..."

Preferably, for at least one recursion of the aforementioned recursive process, the one or more steps performing a content check of the respective child XML element comprises one or more steps determining one or more likely encoding schemes of said child XML element, decoding, for one or more of said likely encoding schemes, at least part of said child XML element to obtain decoded child content and subjecting said decoded child content to a content check.

Not only may XML elements be nested, their character data may moreover be multiply encoded. Furthermore, as noted above, it can be extremely difficult to unambiguously determine, without a *priori* knowledge, the encoding scheme with which the content of an XML element, be it a root element or a child element, has been encoded. The aforementioned steps allow the content of an element to be checked with regard to various combinations of recursive and non-recursive encoding schemes over multiple levels of hierarchy.

Preferably, a content check of an XML element comprises steps establishing, as element structure information, information indicative of one or more of the size of said XML element, the name of said XML element, one or more likely encoding schemes of said XML element, the likeliness of said likely encoding schemes, the number of child elements within said XML element, the number of encoded child elements within said XML element, and one or more likely encoding schemes of child elements of said XML element. Preferably, a content check of an XML element comprises steps establishing, as a constituent of said element structure information, a list of child elements of said XML element.

It is an object of the present disclosure to categorize XML elements, in particular XML root elements, as a basis on which to classify their content. The aforementioned element structure information can be highly indicative of an element's type, which, in turn, can be highly indicative of its category.

Preferably, said list of child elements is indicative, for each child element in said list, of one or more of a content length of the respective child element, one or more likely encoding schemes of the respective child element, the likeliness of said likely encoding schemes and a name of the respective child element. Preferably, said establishing of a list is a recursive process and comprises, for each child element in said list, steps establishing, as a constituent of said element structure information, information indicative of one or more of the size of the respective child element, one or more likely encoding schemes of the respective child element, the number of child elements within the respective child element, the number of encoded child elements within the respective child element and one or more likely encoding schemes of child elements of the respective child element and/or establishing, as a constituent of said element structure information, a list of child elements of the respective child element.

As noted above, XML elements may be nested. Through the aforementioned preferable features, the disclosed method has the capability of generating element structure information that reflects the hierarchical structure of an element and its constituent elements. The disclosed method thus has a basis on which to match even complexly structured elements to *a priori* data that reflects known element structures.

Since, in accordance with the present disclosure, a content check may be carried out at any hierarchical level within an XML element, element structure information as described above can be established for any element within the hierarchy. Thus, even if element structure information established for an element cannot be matched or cannot be unambiguously matched with *a priori* data reflecting known element structures, this need not obstruct a matching of element structure information established (possibly separately) for constituent child elements of said element with such *a priori* data.

Preferably, a content check of an XML element comprises steps determining, for one or more categories, a degree to which said element structure information matches element structure data associated with the respective category.

Although the content of a data object can be assessed, as described above, via plaintext data contained therein, a matching of element structure information associated with a particular element (as well as, optionally, child elements contained therein) with element structure information associated with a respective category permits categorization based *e.g.* on information that might not be available in plaintext or that is not directly reflected in the data constituting the element such as the logical structure of the element. In general, such a matching of element structure information will permit a less superficial assessment of an element's content than a plaintext-based assessment.

The degree of match may be determined and represented *e.g.* as a binary value, wherein 0 reflects zero correlation between the respective information and 1 indicates a perfect match, or vice-versa. It may also be determined and represented as a tertiary value reflecting *e.g.* zero correlation, a partial match and a perfect match. In order to reflect the fact that the element structure information associated with a respective element might not exactly match element structure information associated with a respective category, the disclosed method preferably determines and represents the degree of a match as any floating value or predetermined subset of values between 0% and 100%, wherein *e.g.* 0% reflects zero correlation between the respective information and 100% indicates a perfect match.

The present disclosure places no restriction on the choice of matching algorithm, including the appropriate choice of information to be matched within said element structure information. Appropriate choices for the above are known to the person skilled in the art of data correlation and data matching, whence reference is made to the relevant prior art with respect to this aspect of the disclosed method's implementation. Naturally, the disclosed method may employ a matching algorithm wherein like information of the respective element structure information is examined for an exact match, *i.e.* wherein *e.g.* the name and most likely encoding scheme of an element (including the child elements comprised in the hierarchical structure thereof) are compared with respective name and encoding scheme data of known elements (including the child elements comprised in the hierarchical structure thereof). In this respect, the matching algorithm may respect the fact that the order in which child elements of a particular hierarchical level are presented is typically irrelevant for the proper processing of an XML element and thus need not be regarded in a determination of a match/mismatch. Preferably, the matching algorithm is chosen such that the degree of match between element structure information associated with a particular XML element and element structure information associated with a particular category is directly indicative of a degree to which it is appropriate to categorize said XML element as belonging to said category.

Preferably, a content check of an XML element comprises steps assigning, for one or more categories, a weight to one or more parts of said XML element indicative of a degree to which, with regard to the respective part, said element structure information matches element structure data associated with the respective category.

In particular in the case of malicious data, there is no reason to assume that the category or apparent category of a root element should be decisive for its classification. Particularly in cases where the category of a root element is uncertain, but the appropriate classification of a constituent child element of the root element can be established with certainty, it may be appropriate to classify the root element *in toto* in accordance with the classification of said constituent element.

As implied by the discussion above, the task of appropriately categorizing data is typically much more complicated than a matching of data patterns. Consequently, the disclosed method optionally employs a weighting algorithm that expounds upon the aforementioned matching and assigns an appropriate weight to a respective part of the XML element.

Preferably, a content check of an XML element comprises one or more steps determining, for one or more categories, a degree to which said XML element associates with the respective category based on a presence of predetermined keywords associated with the respective category in said XML element.

Preferably, a content check of an XML element comprises one or more steps determining, for one or more categories, a degree to which said XML element associates with the respective category based on a presence of predetermined keywords associated with the respective category in XML markup of said XML element, in particular in the group of XML mark-up consisting of start-tags, end-tags and element type declarations.

Preferably, a content check of an XML element comprises one or more steps determining, for one or more categories, a degree to which said XML element associates with the respective category based on a presence of predetermined keywords in XML character data of said XML element.

As will be readily apparent to the reader, the presence of predetermined keywords, when appropriately selected, can be highly indicative of the category of the data containing those keywords. By incorporating a keyword search into a content check, particularly into the recursive process of a content check, the disclosed method is able to search for keywords even in data that was originally encoded. This applies especially for XML markup which commonly harbors such keywords, *e.g.* in the form of the unique or characteristic element tags. Nonetheless, such keywords can also be found in the character data of an element. Since the presence of such keywords in the markup of an element will typically be assessed differently than the presence of such keywords in the character data of an element, it is preferable but these keywords searches be effected separately from one another, either temporally or logically.

Preferably, a content check of an XML element comprises one or more steps assigning, for one or more categories, a weight to one or more parts of said XML element indicative of a degree to which, with regard to the respective part, said XML element associates with the respective category.

As will be clear to the reader from the discussions above, an appropriate weighting of respective parts of an element, not just with respect to the aforementioned matching, but in general, can constitute an important process in establishing the category of an element or respective parts thereof.

Preferably, a content check of an XML element comprises one or more steps determining, for one or more categories, a degree to which XML markup of said XML element matches data associated with the respective category.

Preferably, a content check of an XML element comprises one or more steps assigning, for one or more categories, a weight to one or more parts of said XML element indicative of a degree to which, with regard to the respective part, said XML markup matches data associated with the respective category.

As will be clear to the reader from the discussions above, matching and weighting, as discussed above, yet solely on the basis of XML markup, likewise constitute a useful tool for establishing or helping to establish the category of an XML element.

Preferably, a content check of an XML element comprises one or more steps assigning, for one or more categories, a total weight to one or more parts of said XML element based on one or more of said weights.

The assignment of a total weight based on one or more (sub-)weights allows, in particular, for a modular design in implementing the disclosed method. This can be particularly advantageous in implementations where respective weightings are dynamically adjusted, *e*.*g.* based on user feedback re the appropriateness of the chosen categorizations and classifications.

Preferably, a content check of an XML element comprises one or more steps identifying one or more parts of said XML element as containing undesired content if said total weight of the respective part of said XML element with respect to at least one category belonging to a group of undesired categories exceeds a respective threshold associated with said at least one category.

Preferably, a content check of an XML element comprises one or more steps identifying one or more parts of said XML element as containing agreeable content if said total weight of the respective part of said XML element with respect to at least one category belonging to a group of agreeable categories exceeds a respective threshold associated with said at least one category.

As noted in the introductory portion of this specification, it is an object of the present disclosure to monitor a data object. Preferably, this is effected in the form of a classification of respective parts of said data object as containing *e.g.* undesired, agreeable or questionable content. A simple, yet effective classification technique is the use of thresholds. These can be measured against the aforementioned total weights assigned for a respective category.

By assigning a respective threshold to one or more respective categories, the classification can be "fine tuned" to react more or less sensitively to particular categories. For example, in a case where any content indicative of data exchange with an adult site, but only content highly indicative of data exchange with *e.g.* a particular stock site is considered undesired, the threshold in the category Adult Sites may be set such that it "triggers" when any data indicative of a data exchange with an adult site is found during the content monitoring. Similarly, the threshold in the category Stock Sites may be set such that it only "triggers" when the content monitoring is sufficiently indicative of a data exchange with *e.g.* the particular stock site. Naturally, the monitoring may also be effected in a manner, wherein *e.g.* a determination of undesired content overrides a determination of agreeable content, or vice-versa. Such an overriding may be dependent *e.g.* on the degree to which the relevant thresholds were exceeded and/or the category in which thresholds were exceeded. It is also clear that a threshold may be "exceeded" by climbing above or falling below the respective threshold, depending on whether the threshold represents an upper or a lower range limit. A category may even comprise an upper and a lower range limit, wherein the range between the two limits represents uncertainty re membership/non-membership of content having a weight falling within that range to the respective category. Likewise, the areas above/below the range represent (more or less) certainty re membership/non-membership (or vice-versa) of content having a weight falling within the respective area to the respective category.

Preferably, a content check of an XML element comprises one or more steps subjecting at least part of said XML element to one or more of a content security device (*e.g.* an antivirus sweeper, a malicious code sweeper, or a URL filter).

Content security devices (*e.g.* Antivirus sweepers, malicious code sweepers or URL filters) are well known in the art of content monitoring. Consequently, re viable implementations thereof, the present description refers the reader to the relevant literature and prior art in the field of content monitoring. As noted in the introductory portion of the present specification, however, antivirus sweepers, malicious code sweepers, URL filters, or any other content security device, as conventionally known, are not well-suited for monitoring the content of encoded data, in particular data that has been encoded using more than one encoding scheme and/or using an encoding scheme that is not known a *priori.*

By subjecting at least part of an XML element to a content security device (*e.g.* an antivirus sweeper, a malicious code sweeper and/or a URL filter) during a content check of said element, the disclosed method is able to apply such conventional data monitoring schemes to data that was initially encoded, even if it was *e.g.* multiply encoded and/or encoded using a not readily recognizable encoding scheme.

Preferably, a type and/or a degree and/or a result of a content check of an XML element depends on prior results of said method, in particular as pertain to said XML element.

By depending, on the basis of prior monitoring results, a type and/or a degree and/or a result of a content check of an XML element, the disclosed method is capable of more swiftly and reliably monitoring, categorizing and/or classifying data content. If, for example, the result of a preliminary content categorization (*i.e.* a scanning of content of a data object for pieces of plaintext data indicative of one or more unique identifiers belonging to a group of unique identifiers in conjunction with a subsequent determining, for one or more categories, of a degree to which one or more of said indicative pieces of data match data associated with the respective category) indicates, with considerable certainty, that particular content belongs to a particular category, a later content check of said content may be limited to limited to that category. Later, if necessary, *e.g.* if the content check does not confirm the preliminarily determined category to sufficient certainty, the content check could be broadened to include other categories. Similarly, if the results of the preliminary content categorization appear sufficiently certain with respect to particular content, may choice not to carry out a content check of said content. As a further example, if the results of a broad content check of particular content confirm the results of a preliminary content categorization of said content, then both results may be considered more certain.

Preferably, the method of the present disclosure comprises one or more steps scanning content of said data object for pieces of plaintext data indicative of one or more unique identifiers belonging to a group of unique identifiers, and determining, for one or more categories, a degree to which one or more of said indicative pieces of data match data associated with the respective category.

These preferred features have been described above with regard to an embodiment that is based on these features. However, they have not yet been described in the context of an embodiment comprising a content check. The following thus expounds upon the detailed description of these features *supra.*

It was noted above that the technique of scanning parts of a data object for plaintext data indicative of unique identifiers and matching such plaintext data to data associated with respective categories is particularly useful for estimating an appropriate classification of the content of said data object. It has moreover been found that the classification estimation of this technique can constitute useful input for a content check. For example, if the element type of an XML root element is identifiable on the basis of plaintext data, the (likely) encoding schemes of the constituent elements of said root element can be determined from *a priori* data relating to said element type rather than having to be determined on the basis of data analysis. Naturally, since malicious code is likely to be disguised by imitating the structure of known, agreeable elements, the disclosed method preferably executes a plausibility check re proper identification of the root element on the basis of the more detailed content check and/or execute a (full) content check without regard to the alleged identification of the root element. Yet even if the results of such a plaintext scanning and matching does not immediately come into play in a subsequent content check, the combined, *e.g.* comparative, results of a content check and a plaintext scanning and matching on the same data can provide information that is highly useful for abbreviated content monitoring based solely on the plaintext scanning and matching technique.

Preferably, if the XML-coded data comprises a network request and a corresponding network response, the scanning step comprises linking indicative pieces of data relating to the network request and the corresponding network response. In a preferred embodiment, the network request/response is a network request/response suitable transmission over the Internet, in particular an http, https, RIP (routing information protocol), AppleTalk Filing Protocol, ftp, sctp or otherwise conventionally protocolled network request/response as known in the art of network data communication, in particular with respect to the so-called application layer of the Open Systems Interconnection Reference Model.

Data network traffic often comprises network requests and network responses. A network request is a data package sent from one network client to another network client with the intention of receiving an appropriate data package, *i.e.* a network response, from the other client in return. Cases often arise wherein it is difficult, if not impossible, to classify the content of such a network request or network response without knowledge of the content of its counterpart. For addressing this difficulty, the disclosed method may be capable of linking indicative pieces of data relating to a network request and the corresponding network response. This "linking" can be achieved in numerous manners. For example, the disclosed method may store indicative pieces of data that appear to be, *prima facie,* part of a network request (*e.g.* for a predetermined amount of time or until indicative pieces of data are found that appear to be part of, or are confirmably part of the corresponding network request) and then, assuming corresponding response data has been found, effecting categorization and/or classification of the respective data to which said request and response belong on the basis of the indicative pieces of data from both the request and the response. In accordance with the above, if said XML-coded data comprises a network response and indicative pieces of data relating to a corresponding network request have been stored, the scanning step preferably comprises one or more steps retrieving said stored indicative pieces of data, and linking indicative pieces of data relating to said network response and said retrieved indicative pieces of data. Similarly, the disclosed method may store the entire data of an apparent network request *e.g.* until (apparent or confirmed) receipt of the corresponding network response and then proceed with categorization and/or classification of the respective data on the basis of both the request and the response. Likewise, the disclosed method may store *e.g.* categorization and/or classification data generated with respect an apparent network request *e.g.* until (apparent or confirmed) receipt of the corresponding network response and then proceed with categorization and/or classification of the respective data on the basis of the stored categorization/classification data and the content of the response.

It follows from the above that "linking" in the present sense can comprise a storage of data, a correlation of data based on *a priori* knowledge of request/response protocol structures, a common processing of data as well as other processes as known in the art of data processing for allowing *e.g.* temporally or spatially disjoint data to be processed with the aim of establishing a common result based on said disjoint data. A peculiarity of the disclosed method is that, in cases where a network response, *e.g.* after categorization and/or classification steps, does not appear to be a probable mate of a previous request, the "linking" may be carried out again with regard to the same request for a later response *e.g.* in the hopes of obtaining more conclusive results.

Generalizing the above, it can be said that the disclosed method preferably comprises one or more steps storing data with regard to one or more of any network requests comprised in the XML-coded data.

Preferably, the disclosed method assigns, for any of (the aforementioned) one or more categories, a weight to one or more parts of the data object indicative of the degree to which indicative pieces of (plaintext) data associated with the respective part match data associated with the respective category.

As discussed above with respect to XML elements, the task of appropriately categorizing data is typically much more complicated than a matching of data patterns. Consequently, the disclosed method optionally employs a weighting algorithm that expounds upon the aforementioned matching and assigns an appropriate weight to one or more respective parts of the data object on the basis of indicative pieces of (plaintext) data.

Preferably, the disclosed method comprises one or more steps identifying one or more parts of said data object as containing undesired content if said weight of the respective part of said data object with respect to at least one category belonging to a group of undesired categories exceeds a respective threshold associated with said at least one category.

Preferably, the disclosed method comprises one or more steps identifying one or more parts of said data object as containing agreeable content if said weight of the respective parts of said data object with respect to at least one category belonging to a group of agreeable categories exceeds a respective threshold associated with said at least one category. Preferably, a respective threshold is associated with each of said one or more categories.

As discussed above with respect to XML elements, the use of thresholds is a simple, yet effective classification technique, *e.g.* for classifying respective parts of a data object as containing *e.g.* undesired, agreeable or questionable content.

Preferably, the group of unique identifiers comprises a hostname, a port and a request path, a user agent, a content type, a SOAP-action or any other user-defined http-header field, and a namespace of said XML-coded data. It has been determined that these conventional identifiers are particularly suitable for categorizing data content.

Preferably, the disclosed method comprises one or more steps adapting, for one or more categories, the data associated with the respective category based on a result of the monitoring. Preferably, the disclosed method comprises one or more steps adapting, for one or more categories, the element structure data associated with the respective category based on a result of the monitoring. Preferably, the disclosed method comprises one or more steps adapting, for one or more categories, the predetermined keywords associated with the respective category based on a result of the monitoring. Preferably, the disclosed method comprises one or more steps adapting, for one or more categories, the data associated with the respective category based on a result of the monitoring.

By adapting, on the basis of monitoring results, data on which it bases its monitoring of data content, the disclosed method is able to refine its capability to swiftly and reliably categorize and/or classify data content. In particular, the disclosed method can exploit "hard earned" knowledge re likely categorization and/or classification of particular data content gained *e.g.* through time-consuming, recursive decoding and analysis of said content to expound upon and/or refine its reservoir of a *priori* information, *i.e.* data, element structure data and/or keywords, considered indicative of appropriate categorization and/or classification of said particular data content. For example, if a particular XML element type is repeatedly, *e.g.* in 80% of a minimum number of previously monitored cases, found to contain content of the category "News," then the disclosed method may adapt the element structure data associated with the category "News" to include element structure data matching said particular XML element type.

As will be clear from the above description, the present disclosure can be implemented in numerous manners. These include, but are not limited to, implementations in software, dedicated hardware, programmable hardware and the like.

### BRIEF DESCRIPTION OF THE DRAWINGS

The novel features of the invention, as well as the invention itself, both as to its structure and its operation will be best understood from the accompanying figures, taken in conjunction with the accompanying description. The Figures show:

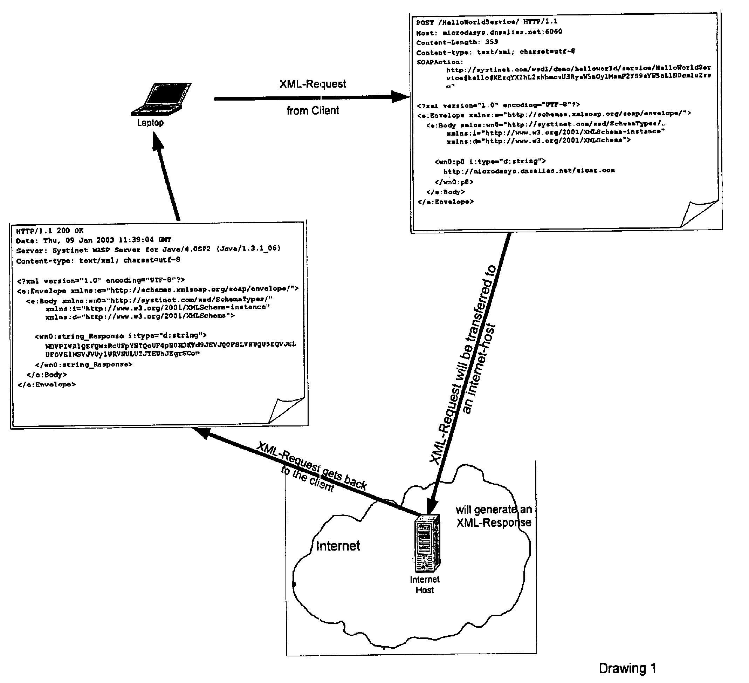

- Fig. 1: conventional transfer of an XML object over the Internet in the form of an XML request and XML response;

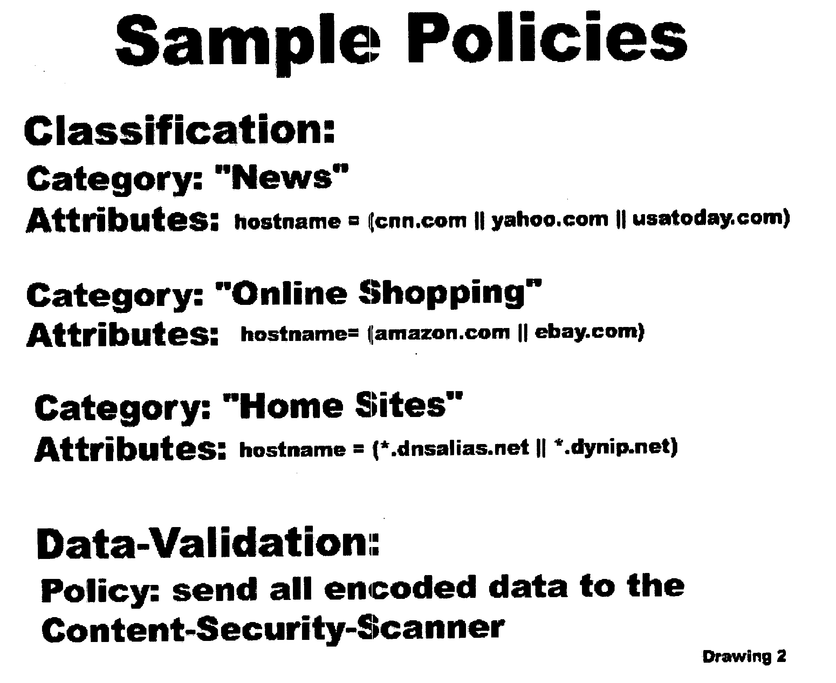

- Fig. 2: a sample policy definition in accordance with a preferred embodiment;

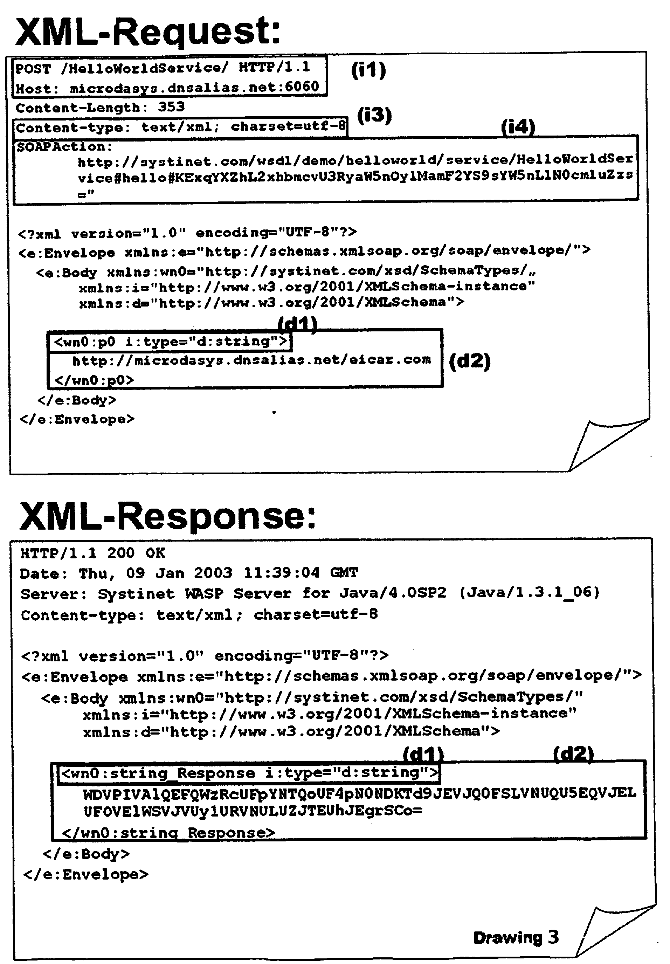

- Fig. 3: an example of a conventional XML object in detail;

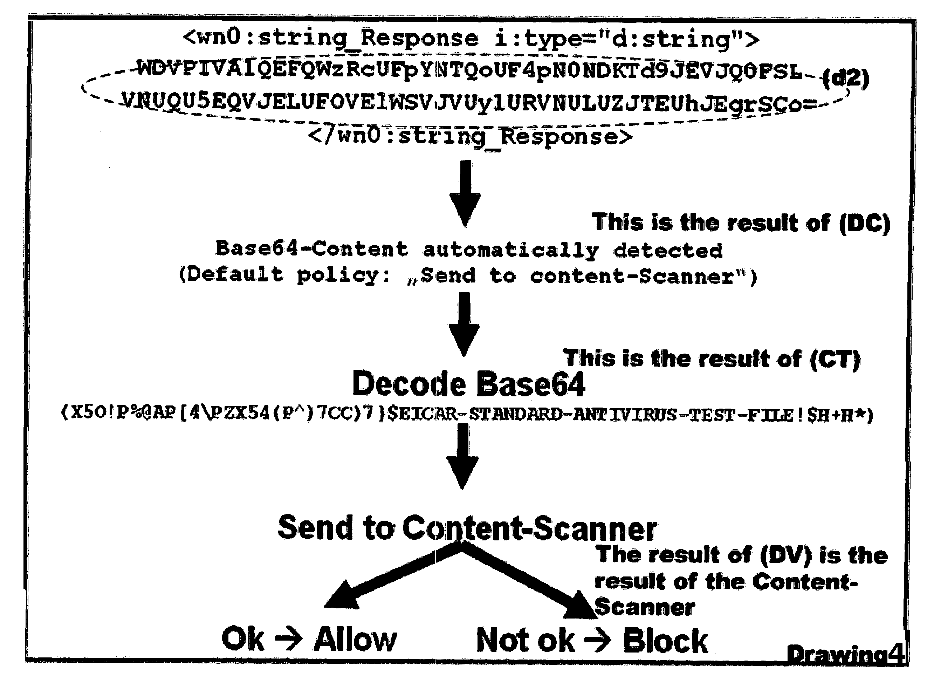

- Fig. 4: an example output of the Data-Check, the Content-Translation and the Data-Validation Components in accordance with a preferred embodiment; and

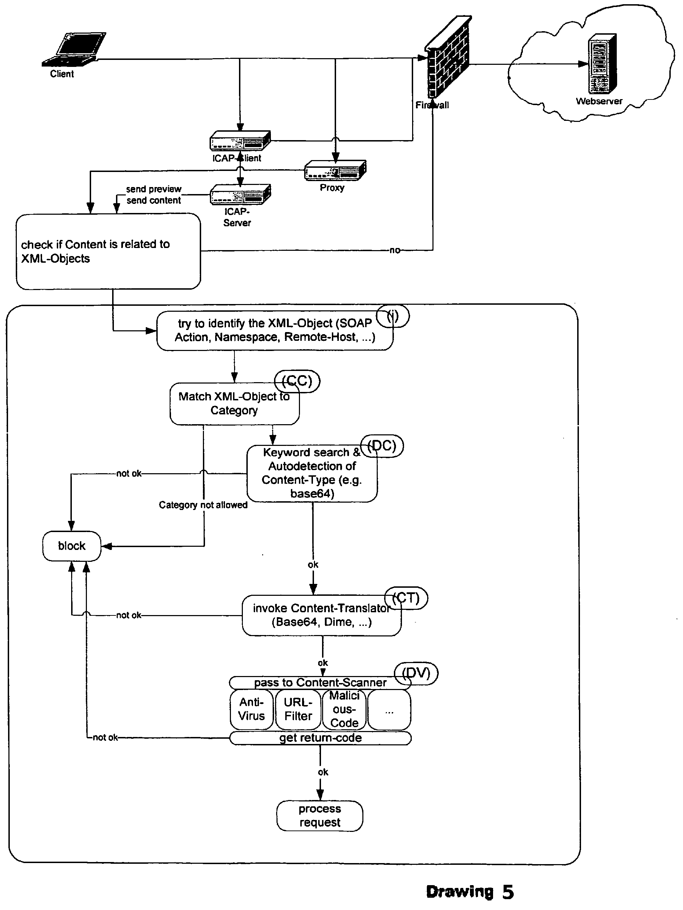

- Fig. 5: the interaction of the four preferred components of the disclosed method in accordance with a preferred embodiment.

### DESCRIPTION OF THE PREFERRED EMBODIMENTS

Before explaining at least one embodiment in detail, it is to be understood that the invention, to the accomplishment of the recited and implied objects, is not limited in its application to the details of construction and to the arrangements of the components set forth in the following description or illustrated in the drawings. In particular, the invention may be embodied in the form illustrated in the accompanying drawings, attention being called to the fact, however, that the drawings are illustrative only, and that changes may be made in the specific construction illustrated. The invention is capable of other embodiments and of being practiced and carried out in various ways. Also, it is to be understood that the phraseology and terminology employed herein are for the purpose of the description and should not be regarded as limiting.

For the description of the preferred embodiments described hereinbelow, the following nomenclature will be employed. As will be readily apparent to the skilled reader, this nomenclature may deviate from the strict nomenclature used in the summary of the invention and is intended to present the preferred embodiments in everyday terms as would be encountered in practice, i.e. during implementation and use of the invention.
- An **XML object** is either a 2-tupel consisting of an XML request and the XML response, if both objects are known (typically, both objects are known in a network environment) or in the case that only one object is known (*e.g.* either the XML request, the XML response or any arbitrary XML file), this object is called an XML object.
- **Known XML objects** are XML objects, for which some kind of definition (e.g. a priori information re the object's logical structure) is available. This definition can be in the form of a WSDL file or an XML scheme, or any other definition format.
- **Unknown XML objects** are, in contrast, XML objects where nothing is known about the definition/scheme or anything else. This means that it is not known what the content of the XML object is about. There is nothing known about the syntax, the semantic, the data types, etc.
- **Content Security Policies** define whether particular content is safe with respect to content-security. Preferably, a Content-Security Policy includes the classification of the XML object and the result of a Content-Scanning-Process (e.g. an antivirus-check, or check for malicious code, etc.)

As discussed in the introductory portion of this description with regard to the disadvantages inherent to the prior art, in particular conventional XML scanners, it is an object of the present disclosure to provide content scanning of unknown XML objects wherein the same can be utilized for validating XML objects (or parts of it) against content-security policies. These content-security policies preferably include classification of the XML object and content scanning (e.g. an antivirus-check, or check for malicious code, etc.).

To attain the aforementioned objects, the disclosed method, in accordance with the preferred embodiment described hereinbelow, comprises a policy-based Validator that classifies the XML object based on the following components, all of which may be comprised within the scope of the present disclosure:
- Category of the XML object (CC)
- Data-Check (DC)
- Content-Translation (CT)
- Data-Validation. (DV)

The Category Component (CC) is responsible to classify the XML object one or more pre-defined categories. The XML object will be classified to one or more predefined (but extensible) categories. The Data-Check Component (DC) is responsible for checking whether the XML object contains "unwanted" content and collects the parts of the XML object for the Content-Translation Component (CT). It is also responsible for "refining" the categories found in the Category Component. This includes an auto-detection of the content-type. The Content-Translation Component is responsible for translating the content found in the XML object into a "readable" form. ("readable" means that the content - which is typically encoded using an encoding algorithm - will be decoded to obtain the "real" (un-encoded / plaintext) data). The Data-Validation Component (DV) will validate the data collected from the "Content-Translation" Component using content-security scanners like antivirus or malicious code scanners.

The Category Component (CC) classifies the XML object to one or more predefined categories. In order to classify an XML object, identification of the XML object is carried out. After the identification, the XML object can be classified to a categorization. The result of this component is preferably a percentage of the certainty with which the XML object fits into a category. The identification is preferably based (but not limited) on the following attributes:
- The Hostname, Port and Path of the Request (i1)
- The User-Agent (i2)
- The Content-Type (i3)
- The SOAP Action or any other user-defined HTTP-Header Field (i4)
- The Namespace of the XML object (i5)

Note: The first 4 attributes can only be aggregated and used for the classification if the XML object consists of a 2-tupel of XML request and XML response.

After identification, the XML object is matched against (predefined) categories. Each category has a definition how and when an XML object will be part of the category. This matching can comprise a keyword match of the attributes collected from the XML object and of the attributes of the category. The result of the keyword matching is weighted using a multiplier. The matching can be an exact match as well as a more relaxed one. The classification could include other attributes that are not yet known (e.g. from different transportation layers, or other unique identifiers).

The Data-Check (DC) is responsible for checking whether the XML object contains "unwanted" content and collects the parts of the XML object for the Content-Translation Component. It is also responsible for "refining" the categories found in the Classification Component. This includes an auto-detection of the content-type. After one or more categories are found in the component "Classification", the data of the XML object will be checked. The first check is a data check re whether the XML object contains "unwanted" content. The check for "unwanted" content is preferably based on the following attributes:
- Keyword search for XML tags and/or XML types (d1)
- Keyword search for contents of XML tags (d2).

The second check is to gather all the parts of the XML object for the Content-Translation Component. This check is preferably based on the following attributes:
- Keyword search for XML tags and/or XML types
- Auto-Detection of the Content-Type of all the parts of the XML object.

Typically, parts of an XML object are encoded using an encoding algorithm. Such encoding algorithms include plaintext, MIME, DIME, base64 and others. MIME and DIME XML objects can be easily detected by analyzing the header. A Base64-encoding can also be detected (e.g. by decoding the data or through use of heuristics).

Once this is known, additional category information will be retrieved. This category information can include the following attributes:
- Size of the whole XML object
- Number of Parts/Tags within the XML object
- Number of encoded Parts/Tags

The Data-Check Component (DC) preferably yields three results:
- additional category information
- a list of the parts of the XML object which are encoded, together with the following information:
   - content length
   - content type (the encoding type)
- a result of the first data check (keyword search).

The Data-Check is a very flexible component. It is possible that the XML object as a whole is encoded (and the parts of that decoded are again encoded, etc.) Consequently, the data check could employ a recursive process.

The Content-Translation Component (CT) is responsible for translating the content found in the XML object into a "readable" form. The Content-Translation will prepare each part from the XML object that was collected by the Data-Check Component for the Data-Validation Component. It will decode the (respective) part(s) of the XML object. The result of this component is preferably a list of the decoded parts of the XML object comprising the following information:
- decoded content length
- decoded content
- additional information about the decoding (was it successful?, etc.)

The Data-Validation Component (DV) validates the data collected by the "Content-Translation" Component using content-security scanners like antivirus or malicious code scanners. The Data-Validation Component passes the decoded data from the "Content-Translation" Component to a Content-Security Scanner (like antivirus-scanners, URL filters, malicious code scanners). The results of these content-security scanners preferably constitute the result of the Data-Validation Component. The behavior of this component relies heavily on the content-security scanners employed.

All the components of the this preferred embodiment are highly structured in a logical way. The overall result is obtained in several steps. First of all, the Classification Component will return a category of the XML object. The Data-Check Component essentially constitutes the "heart" of the disclosed method, since it analyzes the XML object for the parts that are to be observed further. These parts are the input to the Content-Translation and the Data-Validation components.

There are operational as well as functional variations of the disclosed method. Operational variations will be clear to the reader having knowledge of the disclosed method as described above in view of the fact that the disclosed method must have access to the XML objects after the requestor sends the request and before the receiver has received it (or vice-versa). This can be accomplished as a proxy in a network environment, or it can be done in other ways (e.g. by accessing an XML object over a local file system). Functional variations can include that the Data-Validation is not only used for Content-Security aspects. This component could easily be extended for e.g. validating digital-signatures, checking the XML scheme or other definition descriptions. Also the disclosed method is not limited to the cited encoding types. MIME, DIME and base64 are currently most common, but there are many others that could be used/encountered by the disclosed method.

In operation, the disclosed method preferably acts as a "normal" application-level proxy that receives all incoming and outgoing requests (these are normally HTTP or HTTPS requests transferred over a TCP/IP network, but can also be other protocols like SMTP and other transmission methods (such as file-systems, etc.) The disclosed method preferably only inspects requests and responses that are used for transmission of XML objects. The proxy has now the full power to inspect the XML traffic and either replace the original content (e.g. if a virus was found) or to block the transmission (e.g. if a web service/XML object was invoked that is not allowed). An administrator can define all the policies that are needed for the proxy to work in the correct and desired mode/manner. There may be more operation modes suitable for the disclosed method (e.g. other protocols like ICAP or others).

As to a further discussion of the manner of usage and operation of the present invention, the same should be apparent from the above description. Accordingly, no further discussion relating to the manner of usage and operation will be provided.

With respect to the above description, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the claimed invention.

Further information with regard to the terminology used in this specification as well as techniques and hardware for implementing the known features of the invention can be found in the documents cited in the bibliography at the end of this specification.

While the preferred and alternative embodiments have been disclosed and described in detail herein, it will be apparent to those skilled in the art that various changes may be made to the configuration, operation and form of the invention without departing from the scope thereof. It is noted that the features of the present disclosure, even those disclosed solely in combination with other features, may be combined in any configuration. Likewise, use of the singular and plural is solely indicative of a preference and is not to be interpreted as limiting. Except where the contrary is explicitly noted, the plural may be replaced by the singular and vice-versa.

## Claims

1. A method for monitoring the content of a data object comprising XML-coded data, comprising:
identifying, on the basis of XML markup, XML elements within one or more parts of said data object; and
performing, for at least one of said identified XML elements, a recursive content check of the respective XML element, wherein
said content check comprises establishing, as element structure information:
• information indicative of one or more likely encoding schemes of said XML element;
• information indicative of the likeliness of said likely encoding schemes; and
• a list of child elements of said XML element,
• said establishing of a list is a recursive process and comprises, for each child element in said list, steps establishing, as a constituent of said element structure information:
• information indicative of one or more likely encoding schemes of the respective child element;
• information indicative of the likeliness of said likely encoding schemes of the respective child elements; and
• a list of child elements of the respective child element.

2. A method for monitoring the content of a data object comprising XML-coded data, comprising:
identifying, on the basis of XML markup, XML elements within one or more parts of said data object; and
performing, for at least one of said identified XML elements, a content check of the respective XML element, wherein
said content check comprises determining at least two likely encoding schemes of said XML element or of a nested element of said XML element, decoding said XML element / nested element of said XML element in accordance with said at least two likely encoding schemes and subjecting the results of the at least two decodings to a content check.

3. The method of claim 1 or 2, wherein a content check of an XML element comprises:
assigning, for one or more categories, a weight to one or more parts of said XML element indicative of a degree to which, with regard to the respective part, said element structure information matches element structure data associated with the respective category.

4. The method of claim 1. 2 or 3, wherein a content check of an XML element comprises:
determining, for one or more categories, a degree to which said XML element associates with the respective category based on a presence of predetermined keywords in XML character data of said XML element.

5. The method of any of claims 1-4, wherein a content check of an XML element comprises:
assigning, for one or more categories, a weight to one or more parts of said XML element indicative of a degree to which, with regard to the respective part, said XML markup matches data associated with the respective category.

6. The method of any of claims 1-5, wherein a content check of an XML element comprises:
subjecting at least part of said XML element to one or more of:
• an antivirus sweeper;
• a malicious code sweeper; and
• a URL filter.

7. The method of any of claims 1-6, wherein a type and/or a degree and/or a result of a content check of an XML element depends on prior results of said method, in particular as pertain to said XML element.

8. The method of any of claims 1-7, comprising:
scanning content of said data object for pieces of plaintext data indicative of one or more unique identifiers belonging to a group of unique identifiers; and
determining, for one or more categories, a degree to which one or more of said indicative pieces of data match data associated with the respective category.

9. The method of claim 8, comprising:
storing indicative pieces of data that appear to be part of a network request,
wherein, if said XML-coded data comprises a network response and indicative pieces of data relating to a corresponding network request have been stored, said scanning step comprises:
retrieving said stored indicative pieces of data; and
linking indicative pieces of data relating to said network response and said retrieved indicative pieces of data.

10. The method of claim 8 or 9, comprising:
assigning, for any of said one or more categories, a weight to one or more parts of said data object indicative of said degree to which indicative pieces of data associated with the respective part match data associated with the respective category; and
identifying one or more parts of said data object as containing undesired content if said weight of the respective part of said data object with respect to at least one category belonging to a group of undesired categories exceeds a respective threshold associated with said at least one category.

11. The method of any of claims 7-10, wherein said group of unique identifiers comprises:
• a hostname, a port and a request path,
• a user agent,
• a content type,
• a SOAP-action or any other user-defined http-header field, and
• a namespace of said XML-coded data.

12. The method of any of claims 5 or 8-11, comprising:
adapting, for one or more of said categories, said data associated with the respective category based on a result of said monitoring.

13. The method of claim 3, comprising:
adapting, for one or more of said categories, said element structure data associated with the respective category based on a result of said monitoring.

14. The method of claim 4, comprising:
adapting, for one or more of said categories, said predetermined keywords associated with the respective category based on a result of said monitoring.

15. A computer program product, configured and adapted for effecting the steps of any of method claims 1-14.

16. An apparatus for monitoring the content of a data object comprising XML-coded data, said apparatus comprising means configured and adapted for effecting the steps of any of method claims 1-14.

## Patentansprüche

1. Verfahren zum Überwachen des Inhalts eines Datenobjekts, das XML-codierte Daten umfasst, wobei das Verfahren umfasst:
Identifizieren von XML-Elementen innerhalb eines oder mehrerer Teile des Datenobjekts auf der Grundlage der XML-Auszeichnung; und
Ausführen einer rekursiven Inhaltsprüfung des jeweiligen XML-Elements für mindestens eines der identifizierten XML-Elemente, wobei
die Inhaltsprüfung das Festsetzen von Folgendem als Elementstrukturinformationen umfasst:
• Informationen, die eines oder mehrere wahrscheinliche Codierungsschemata des XML-Elements angeben;
• Informationen, die die Wahrscheinlichkeit der wahrscheinlichen Codierungsschemata angeben; und
• eine Liste von Child-Elementen des XML-Elements,
• wobei das Festsetzen einer Liste ein rekursiver Prozess ist und für jedes Child-Element in der Liste die Schritte des Festsetzens von Folgendem als einen Bestandteil der Elementstrukturinformationen umfasst:
• Informationen, die eines oder mehrere wahrscheinliche Codierungsschemata des jeweiligen Child-Elements angeben;
• Informationen, die die Wahrscheinlichkeit der wahrscheinlichen Codierungsschemata der jeweiligen Child-Elemente angeben; und
• eine Liste von Child-Elementen des jeweiligen Child-Elements.

2. Verfahren zum Überwachen des Inhalts eines Datenobjekts, das XML-codierte Daten umfasst, wobei das Verfahren umfasst:
Identifizieren von XML-Elementen innerhalb eines oder mehrerer Teile des Datenobjekts auf der Grundlage der XML-Auszeichnung; und
Ausführen einer Inhaltsprüfung des jeweiligen XML-Elements für mindestens eines der identifizierten XML-Elemente, wobei
die Inhaltsprüfung das Bestimmen mindestens zweier wahrscheinlicher Codierungsschemata des XML-Elements oder eines verschachtelten Elements des XML-Elements,
das Decodieren des XML-Elements/verschachtelten Elements des XML-Elements in Übereinstimmung mit den mindestens zwei wahrscheinlichen Codierungsschemata und das Unterwerfen der Ergebnisse der mindestens zwei Decodierungen einer Inhaltsprüfung umfasst.

3. Verfahren nach Anspruch 1 oder 2, bei dem eine Inhaltsprüfung eines XML-Elements umfasst:
für eine oder mehrere Kategorien Zuweisen eines Gewichts zu einem oder mehreren Teilen des XML-Elements, das einen Grad angibt, in dem hinsichtlich des jeweiligen Teils die Elementstrukturinformationen mit Elementstrukturdaten, die der jeweiligen Kategorie zugeordnet sind, übereinstimmen.

4. Verfahren nach Anspruch 1, 2 oder 3, bei dem eine Inhaltsprüfung eines XML-Elements umfasst:
für eine oder mehrere Kategorien Bestimmen eines Grads, in dem das XML-Element der jeweiligen Kategorie zugeordnet ist, auf der Grundlage einer Anwesenheit vorgegebener Schlüsselwörter in XML-Zeichendaten des XML-Elements.

5. Verfahren nach einem der Ansprüche 1-4, bei dem eine Inhaltsprüfung eines XML-Elements umfasst:
für eine oder mehrere Kategorien Zuweisen eines Gewichts zu einem oder mehreren Teilen des XML-Elements, das einen Grad angibt, in dem hinsichtlich des jeweiligen Teils die XML-Auszeichnung mit Daten übereinstimmt, die der jeweiligen Kategorie zugeordnet sind.

6. Verfahren nach einem der Ansprüche 1-5, bei dem eine Inhaltsprüfung eines XML-Elements umfasst:
Unterwerfen mindestens eines Teils des XML-Elements einem oder mehreren von:
• einem Antivirus-Reiniger;
• einem Reiniger von bösartigem Code; und
• einem URL-Filter.

7. Verfahren nach einem der Ansprüche 1-6, bei dem ein Typ und/oder ein Grad und/oder ein Ergebnis einer Inhaltsprüfung eines XML-Elements von früheren Ergebnissen des Verfahrens, insbesondere von solchen, die das XML-Element betreffen, abhängt.

8. Verfahren nach einem der Ansprüche 1-7, das umfasst:
Abtasten des Inhalts des Datenobjekts auf Stücke von Klartextdaten, die einen oder
mehrere eindeutige Identifizierer angeben, die zu einer Gruppe eindeutiger Identifizierer gehören; und
für eine oder mehrere Kategorien Bestimmen eines Grads, in dem eines oder mehrere der angebenden Datenstücke mit Daten übereinstimmen, die der jeweiligen Kategorie zugeordnet sind.

9. Verfahren nach Anspruch 8, das umfasst:
Speichern angebender Datenstücke, die Teil einer Netzanforderung zu sein scheinen, wobei dann, wenn die XML-codierten Daten eine Netzantwort umfassen und angebende Datenstücke, die sich auf eine entsprechende Netzanforderung beziehen, gespeichert worden sind, der Abtastschritt umfasst:
Wiedergewinnen der gespeicherten angebenden Datenstücke; und
Verknüpfen der angebenden Datenstücke, die sich auf die Netzantwort beziehen, und
der wiedergewonnenen angebenden Datenstücke.

10. Verfahren nach Anspruch 8 oder 9, das umfasst:
für irgendwelche der einen oder mehreren Kategorien Zuweisen eines Gewichts zu einem oder mehreren Teilen des Datenobjekts, das den Grad angibt, in dem die angebenden Datenstücke, die dem jeweiligen Teil zugeordnet sind, mit Daten übereinstimmen, die der jeweiligen Kategorie zugeordnet sind; und
Identifizieren eines oder mehrerer Teile des Datenobjekts als unerwünschten Inhalt enthaltend, wenn das Gewicht des jeweiligen Teils des Datenobjekts in Bezug auf mindestens eine Kategorie, die zu einer Gruppe unerwünschter Kategorien gehört, einen jeweiligen Schwellenwert, der der mindestens einen Kategorie zugeordnet ist, übersteigt.

11. Verfahren nach einem der Ansprüche 7-10, bei dem die Gruppe eindeutiger Identifizierer umfasst:
• einen Host-Namen, einen Port und einen Anforderungsweg,
• einen User Agent
• einen Inhaltstyp,
• eine SOAP-Aktion oder irgendein anderes anwenderdefiniertes http-Anfangsblockfeld, und
• einen Namensraum der XML-codierten Daten.

12. Verfahren nach einem der Ansprüche 5 oder 8-11, das umfasst:
für eine oder mehrere der Kategorien Anpassen der Daten, die der jeweiligen Kategorie zugeordnet sind, auf der Grundlage eines Ergebnisses der Überwachung.

13. Verfahren nach Anspruch 3, das umfasst:
für eine oder mehrere der Kategorien Anpassen der Elementstrukturdaten, die der jeweiligen Kategorie zugeordnet sind, auf der Grundlage eines Ergebnisses der Überwachung.

14. Verfahren nach Anspruch 4, das umfasst:
für eine oder mehrere der Kategorien Anpassen der vorgegebenen Schlüsselwörter, die der jeweiligen Kategorie zugeordnet sind, auf der Grundlage eines Ergebnisses der Überwachung.

15. Computerprogrammprodukt, das zum Bewirken der Schritte eines der Verfahrensansprüche 1-14 konfiguriert und ausgelegt ist.

16. Vorrichtung zum Überwachen des Inhalts eines Datenobjekts, das XML-codierte Daten umfasst, wobei die Vorrichtung Mittel umfasst, die zum Bewirken der Schritte eines der Verfahrensansprüche 1-14 konfiguriert und ausgelegt sind.

## Revendications

1. Procédé de surveillance du contenu d'un objet de données comprenant des données à codage XML, comprenant :
l'identification en fonction d'un marquage XML d'éléments XML au sein d'une ou plusieurs parties dudit objet de données ; et
la réalisation pour au moins un desdits éléments XML identifiés d'une vérification de contenu récursive de l'élément XML respectif, dans lequel
ladite vérification de contenu comprend l'établissement en tant qu'informations de structure d'élément :
• d'informations indicatrices d'un ou plusieurs arrangements d'encodage probables dudit élément XML ;
• d'informations indicatrices de la probabilité desdits arrangements d'encodage probables ; et
• d'une liste d'éléments enfants dudit élément XML,
• ledit établissement d'une liste est un processus récursif et comprend pour chaque élément enfant dans ladite liste des étapes établissant en tant que constituant desdites informations de structure d'élément :
• d'informations indicatrices d'un ou plusieurs arrangements d'encodage probables de l'élément enfant respectif ;
• d'informations indicatrices de la probabilité desdits arrangements d'encodage probables des éléments enfants respectifs ; et
• d'une liste d'éléments enfants de l'élément enfant respectif.

2. Procédé de surveillance du contenu d'un objet de données comprenant des données à codage XML, comprenant :
l'identification en fonction d'un marquage XML d'éléments XML au sein d'une ou plusieurs parties dudit objet de données ; et
la réalisation pour au moins un desdits éléments XML identifiés d'une vérification de contenu de l'élément XML respectif, dans lequel
ladite vérification de contenu comprend la détermination d'au moins deux arrangements d'encodage probables dudit élément XML ou d'un élément imbriqué dudit élément XML, le décodage dudit élément XML / élément imbriqué dudit élément XML conformément auxdits au moins deux arrangements d'encodage probables et la soumission des résultats des au moins deux décodages à une vérification de contenu.

3. Procédé selon la revendication 1 ou 2, dans lequel une vérification de contenu d'un élément XML comprend :
l'attribution pour une ou plusieurs catégories d'un poids à une ou plusieurs parties dudit élément XML indicateur d'un degré auquel lesdites informations de structure d'élément correspondent, par rapport à la partie respective, à des données de structure d'élément associées à la catégorie respective.

4. Procédé selon la revendication 1, 2 ou 3, dans lequel une vérification de contenu d'un élément XML comprend :
la détermination pour une ou plusieurs catégories d'un degré auquel ledit élément XML s'associe à la catégorie respective en fonction d'une présence de mots-clés prédéterminés dans des données de caractère XML dudit élément XML.

5. Procédé selon l'une quelconque des revendications 1 à 4, dans lequel une vérification de contenu d'un élément XML comprend :
l'attribution pour une ou plusieurs catégories d'un poids à une ou plusieurs parties dudit élément XML indicateur d'un degré auquel ledit marquage XML correspond, par rapport à la partie respective, à des données associées à la catégorie respective.

6. Procédé selon l'une quelconque des revendications 1 à 5, dans lequel une vérification de contenu d'un élément XML comprend :
la soumission d'au moins une partie dudit élément XML à un ou plusieurs éléments parmi :
• un analyseur antiviral ;
• un analyseur de programme malveillant ; et
• un filtre URL.

7. Procédé selon l'une quelconque des revendications 1 à 6, dans lequel un type et/ou un degré et/ou un résultat d'une vérification de contenu d'un élément XML dépend de résultats précédents dudit procédé, notamment en ce qui concerne ledit élément XML.

8. Procédé selon l'une quelconque des revendications 1 à 7, comprenant :
le balayage du contenu dudit objet de données pour des parties de données de texte en clair indicatrices d'un ou plusieurs identifiants uniques appartenant à un groupe d'identifiants uniques ; et
la détermination pour une ou plusieurs catégories d'un degré auquel une ou plusieurs desdites parties de données indicatrices correspondent à des données associées à la catégorie respective.

9. Procédé selon la revendication 8, comprenant :
le stockage de parties de données indicatrices qui semblent faire partie d'une requête de réseau,
dans lequel, si lesdites données à codage XML comprennent une réponse de réseau et des parties de données indicatrices concernant une requête de réseau correspondante ont été stockées, ladite étape de balayage comprend :
la récupération desdites parties de données indicatrices stockées ; et
la liaison des parties de données indicatrices concernant ladite réponse de réseau et desdites parties de données indicatrices récupérées.

10. Procédé selon la revendication 8 ou 9, comprenant :
l'attribution pour l'une quelconque desdites une ou plusieurs catégories d'un poids à une ou plusieurs parties dudit objet de données indicateur dudit degré auquel des parties de données indicatrices associées à la partie respective correspondent à des données associées à la catégorie respective ; et
l'identification d'une ou plusieurs parties dudit objet de données comme contenant du contenu indésirable si ledit poids de la partie respective dudit objet de données par rapport à au moins une catégorie appartenant à un groupe de catégories indésirables dépasse un seuil respectif associé à ladite au moins une catégorie.

11. Procédé selon l'une quelconque des revendications 7 à 10, dans lequel ledit groupe d'identifiants uniques comprend :
• une adresse Internet, un port et un chemin de requête,
• un agent utilisateur,
• un type de contenu,
• une action SOAP ou tout autre champ à en-tête http défini par l'utilisateur, et
• un espace de nommage desdites données à codage XML.

12. Procédé selon l'une quelconque des revendications 5 ou 8 à 11, comprenant :
l'adaptation pour une ou plusieurs desdites catégories desdites données associées à la catégorie respective en fonction d'un résultat de ladite surveillance.

13. Procédé selon la revendication 3, comprenant :
l'adaptation pour une ou plusieurs desdites catégories desdites données de structure d'élément associées à la catégorie respective en fonction d'un résultat de ladite surveillance.

14. Procédé selon la revendication 4, comprenant :
l'adaptation pour une ou plusieurs desdites catégories desdits mots-clés prédéterminés associés à la catégorie respective en fonction d'un résultat de ladite surveillance.

15. Produit de programme informatique configuré et adapté pour effectuer les étapes de l'une quelconque des revendications de procédé 1 à 14.

16. Appareil pour surveiller le contenu d'un objet de données comprenant des données à codage XML, ledit appareil comprenant un moyen configuré et adapté pour effectuer les étapes de l'une quelconque des revendications de procédé 1 à 14.
